# EUROPEAN PATENT SPECIFICATION

(11) **EP 1 910 159 B1**
(45) Date of publication and mention of the grant of the patent: **27.01.2010**
(21) Application number: 05764546.7
(22) Date of filing: 01.08.2005
(51) Int. Cl.: B62K 21/00, B62K 25/16, B62K 25/28, B62J 15/00, B62K 21/20

(54) **STEERING, SUSPENSION AND FIXATION SYSTEM FOR MOTORCYCLE WHEELS**
LENK-, FEDERUNGS- UND BEFESTIGUNGSSYSTEM FÜR MOTORRADRÄDER
SYSTEME DE DIRECTION, DE SUSPENSION ET DE FIXATION POUR ROUES DE MOTOCYCLETTE

(43) Date of publication of application: 16.04.2008
(73) Proprietor: Maroco, Nuno Manuel Filipe, 6300-706 Guarda (PT); Ruivo, Antonio Maria Sanches, 6005-060 Alcains (PT)
(72) Inventor: Maroco, Nuno Manuel Filipe, 6300-706 Guarda (PT); Ruivo, Antonio Maria Sanches, 6005-060 Alcains (PT)
(74) Representative: Ferreira, Maria Silvina
(86) International application number: PCT/PT2005/000008
(87) International publication number: WO 2007/015653

(56) References cited:
- BE-A- 442 608
- DE-A1- 19 625 316
- FR-A- 2 332 169
- GB-A- 2 167 361
- US-A- 4 422 661
- US-A- 4 511 013

## Description

The steering of conventional motorcycles has a direct system in which the handlebar is directly connected to the support fork of the front axle, which makes wheel vibrations and shocks felt immediately by the driver. It also does not allow the fork angle of incidence that supports the wheel in the ground, to vary. The front suspension is also placed in the fork being necessary to find a compromise between an accurate damping direct system and an efficient damping system, which only is achieved when height in the front of motorcycle is increased but with all inconveniences for the softness of the vehicle movement or expensive damping systems. It also must be referred that fenders of conventional motorcycle wheels are generally too far from the wheels.

The present invention refers to the steering, suspension and fixation system of motorcycle wheels, with extension damping in front wheel and a preferred embodiment with compression damping in the rear wheel, aiming to absorb the resulting shocks and vibrations of the effect of the motion, damping considerably the shocks and vibrations transmitted to the motorcycle, as well as to the driver.

This system has a high rigid chassis which permits a higher rolling softness.

### Prior Art

BE442608A refers to a front wheel steering, suspension and fixation system that does not comprise: an arm (2) which in turn is coupled to at least a crank (3) that has rotary joints at extremities and through a second arm (4) commands the motorcycle front forks (5) which are rotably connected over the fender (8) and drive the front wheel (6); neither does it comprise a front suspension damping system composed by a damper (12) working in extension between the chassis (9) and the front wheel fender (8) through a first articulation (10) means which connect the chassis frame body (9) to the front fender (8), and together with a second articulation (11) means which connect the front damper (12) to the fender (8).

FR2332169A1 refers to a front wheel steering, suspension and fixation system according to the preamble of claim 1, that does not comprise: an arm (2) which in turn is coupled to at least a crank (3) that has rotary joints at extremities and through a second arm (4) commands the motorcycle front forks (5) which are rotably connected over the fender (8) and drive the front wheel (6); neither does it comprise a front suspension damping system composed by a damper (12) working in extension between the chassis (9) and the front wheel fender (8) through a first articulation (10) means which connect the chassis frame body (9) to the front fender (8), and together with a second articulation (11) means which connect the front damper (12) to the fender (8).

GB2167361A refers to a back wheel suspension and fixation system that does not comprise a rear compression damping system working by compression, between the chassis frame body (9) and the rear wheel fixation system through a first connection mechanism composed by a balancer (16) that has a central bearing (17) support connected to the chassis (9) and balances the stresses imposed by the rear wheel damper (14) rotary joint (15) and a crank member (18) that has two rotary joints at extremities (22, 23) and creates the connection between the balancer (16) and the rear fender (19), whereby a second connection is simply composed by a rotary joint (13) that connects the chassis frame body (9) to the rear fender (19).

GB2167361A does not comprise a front wheel steering, suspension and fixation system; neither does it comprise an arm (2) which in turn is coupled to at least a crank (3) that has rotary joints at extremities and through a second arm (4) commands the motorcycle front forks (5) which are rotably connected over the fender (8) and drive the front wheel (6); neither does it comprise a front suspension damping system composed by a damper (12) working in extension between the chassis (9) and the front wheel fender (8) through a first articulation (10) means which connect the chassis frame body (9) to the front fender (8), and together with a second articulation (11) means which connect the front damper (12) to the fender (8).

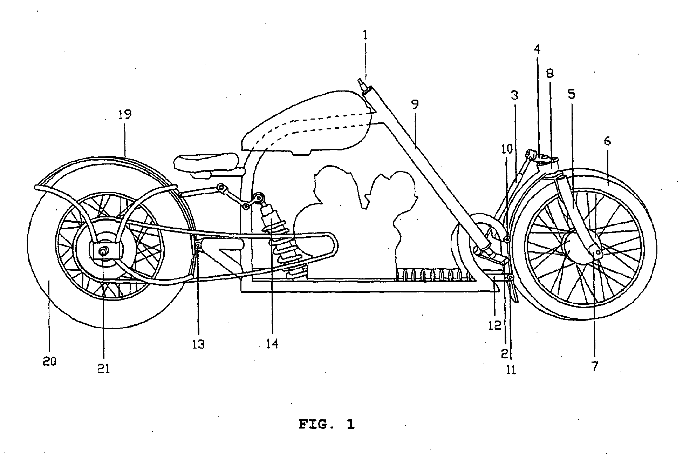

Figure 1 is a simplified and perspective schematic draw of the motorcycle according to the invention.

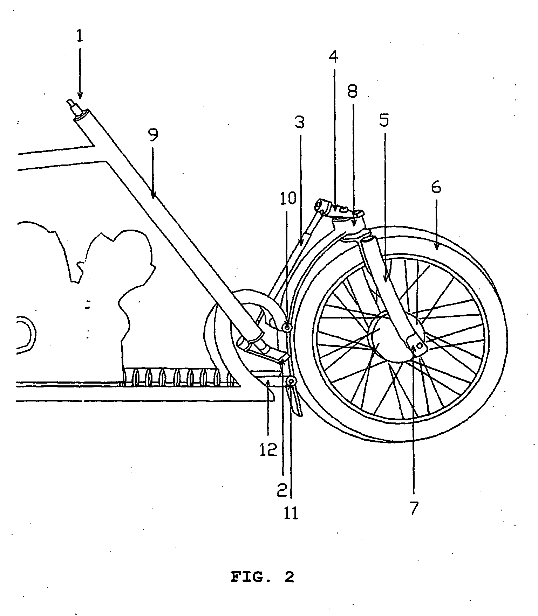

Figure 2 is a simplified and perspective schematic draw of the front of the motorcycle according to the invention, that illustrate the steering positioning of damping system that comprises the suspension and fixation system of the front wheel.

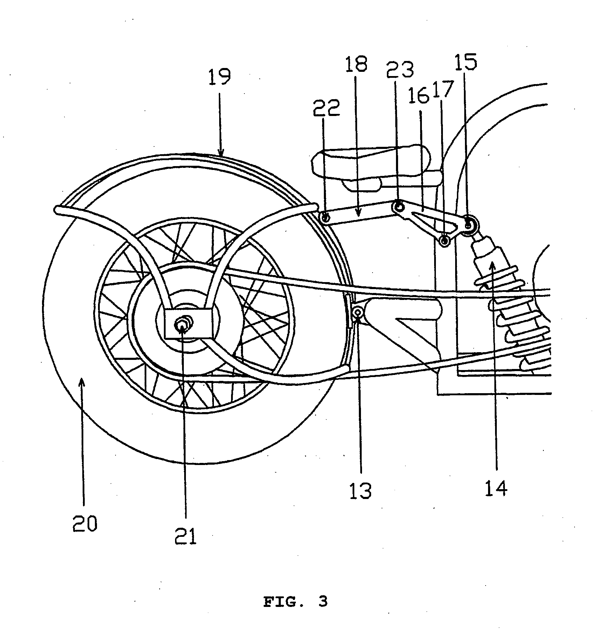

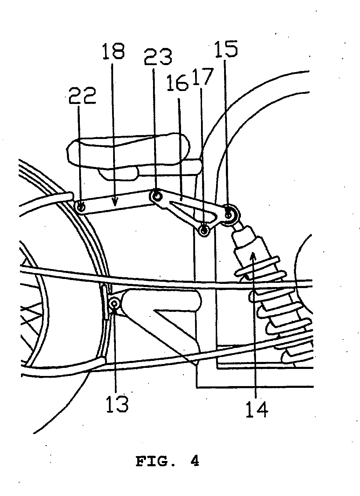

Figure 3 and Figure 4 are a simplified and perspective schematic draw of a preferred embodiment, a damping system detail which comprises the suspension and the fixation system of the rear wheel.

### Description of requested materialization

Referring to the pictures it will be now described in a detailed way the characterization of the motorcycle of the present invention and which is also present in the pictured example of the steering, suspension and fixation system of the wheels trough the fenders.

The steering is comprised by a handlebar alongside of steering axle (1) connected to the support fork (5) of the front wheel (6). The cranks (3) have bearings at extremities, connected to the steering arms (2) and (4) which allows a fast alignment of the motorcycle steering. The front suspension integrates a damping system comprised by a damper (12) working in extension between the chassis (9) and the fender (8) of the front wheel support (6). This system aims to absorb the resulting shocks on the wheels by motion effects, decreasing considerably the vibrations transmitted to the motorcycle, as well as to the driver. The fixation system of the front wheel is achieved by an articulation (10) that connects the chassis (9) to the front fender (8) which backup the fork (5) which supports the wheel (6) by axle (7), this articulation (10) together with the bearing (11) of the front damper (12) allows to keep the fender (8) aligned, which supports rigidly the articulation of the fork steering.

Besides this front axle damping system (7), in a preferred embodiment of the present invention, the suspension of motorcycle also integrates the damping system at the back wheel (20) comprising a damper (14) working with compression, between the chassis (9) and the balancer (16) that assures together with the crank (18) the connection to the fender of rear wheel (19). The balancer (16) can turn over the bearing (17) connected to the chassis (9), working as a grip between the bearing (15) of connection to the damper and bearing to the crank (18). This balancer (16) has the function to allow the damper function in a position near the vertical firmly backup chassis in surroundings of motor, where the values of rigidity and resistance are higher.

The fixation system of the rear wheel is achieved by the articulation (13) which links the chassis (9), in a elevated rigid and resistant zone, to the rear fender (19) that guarantees the connection to the axle (21) that support the wheel (20). This articulation (13) together with the bearing (22) of the crank (18) of the mechanism of rear damping allows to maintain aligned the fender (19) that supports rigidly the rear wheel. The crank (18) make use of the bearing (22) and (23) in their extremes in way of varies rapidly the height to the soil, in case it will be necessary, for example in a situation of passing through an asphaltic road to a track with accented several levels. The present solution of steering, suspension and fixation of motorcycle wheels, allow a lower gravity centre of the vehicle, as well as the increase of softness of the roller thanks to the adopted damping system and to the rigidly of chassis.

That proposed kind of steering, suspension and fixation of wheels solution can be applied to any type of motorcycle or moped.

Inasmuch, a preferred embodiment of the present invention prescribes a steering, suspension and fixation system for motorcycles wheels wherein it comprises:
- an integrated steering system at the front of the motorcycle having a mechanism comprised by an handlebar connected to the steering axle (1), which rotates inside the chassis frame body (9), wherein:

- it operates an arm (2) which in turn is coupled to at least a crank (3) that has rotary joints at extremities and through a second arm (4) commands the motorcycle front forks (5) which are rotably connected over the fender (8) and drive the front wheel (6);
- it comprises a front suspension damping system comprised by a damper (12) working in extension between the chassis (9) and the front wheel fender (8) through a first articulation (10) means which connect the chassis frame body (9) to the front fender (8), and together with a second articulation (11) means which connect the front damper (12) to the fender (8).

In another preferred embodiment of the present invention, it further comprises:
- a rear compression damping system working by compression, between the chassis frame body (9) and the rear wheel fixation system through a first connection mechanism comprised by a balancer (16) that has a central bearing (17) support connected to the chassis (9) and balances the stresses imposed by the rear wheel damper (14) rotary joint (15) and a crank member (18) that has two rotary joints at extremities (22, 23) and creates the connection between the balancer (16) and the rear fender (19), a second connection is simply comprised by of a rotary joint (13) that connects the chassis frame body (9) to the rear fender (19).

In another further preferred embodiment of the present invention, the height of the motorcycle to the soil may vary rapidly by adapting the crank (18) position by means of the two rotary joints at extremities (22, 23).

In yet another and further preferred embodiment of the present invention, the gravity centre is lower while preserving damping capability due to a lower placement of the connections (10, 11, 13, 22).

In still another preferred embodiment of the present invention, it comprises a motorcycle or moped including a steering, suspension and fixation system according to any one of the previous preferred embodiments.

## Claims

1. Steering, suspension and fixation system for motorcycle wheels comprising:
- an integrated steering system at the front of the motorcycle having a mechanism comprising an handlebar connected to the direction axle (1), which rotates inside the chassis frame body (9),
**characterized in that**:
- the direction axle(1) operates an arm (2) which in turn is coupled by means of a crank (3) that has rotary joints at its extremities, through a second arm (4) to control the motorcycle front forks (5) which are rotatably connected to the fender (8) to steer the front wheel (6);
- wherein a front suspension damping system comprises a damper (12) working in extension between the chassis frame body (9) and the front wheel fender (8) whereby a first articulation (10) means connects the chassis frame body (9) to the front fender (8), and a second articulation means (11) which connects the damper (12) to the fender (8).

2. Steering, suspension and fixation system for motorcycle wheels according to claim 1 additionally comprising:
- a rear compression damping system working by compression, between the chassis frame body (9) and the rear wheel fixation system,
- comprising a first connection mechanism comprising a balancer (16) has a central bearing (17) support connected to the chassis frame body (9) and balances the stresses imposed by the rear wheel damper (14) rotary joint (15) and a crank member (18) that has two rotary joints at extremities (22, 23) and creates the connection between the balancer (16) and the rear fender (19), and comprising a second connection by means of a rotary joint (13) that connects the chassis frame body (9) to the rear fender (19).

3. System according to claim 2, wherein the height of the motorcycle to the soil may vary rapidly by adapting the crank (18) position by means of the two rotary joints at extremities (22, 23).

4. System according to claim 1 or claim 2, wherein the gravity centre is lower, while preserving damping capability, due to a lower placement of the connections (10, 11, 13, 22).

5. Motorcycle or moped including a steering, suspension and fixation system according to any one of the previous claims.

## Patentansprüche

1. System zur Lenkung, Aufhängung und Befestigung für Räder von Motorrädern, umfassend:
- ein in dem Vorderteil des Motorrades bleibend integrierte Lenkungsystem, welche einen Mechanismus, der einen mit dem Steurachse (1) verbunden Lenker umfaßt, hat, welcher in dem Kastengerippe des Chassis (9) dreht,
**dadurch gekennzeichnet, daß**:
- der Steurachse (1) einen Arm (2) antreibt, welcher seinerseits, durch einer Kurbel (3), welche in den Ende Drehgelenke hat, durch einen zweiten Arm (4) darum gekoppelt ist, um die Gabeln (5) des Vorderteiles des Motorrades zu steuern, welche an dem Fender (8) drehend darum gekoppelt sind, um das Rad (6) des Vorderteiles des Motorrades zu lenken,
- wohin ein Vorderdämpfungystem einen Stoßdämpfer (12) umfaßt, welcher zwischen dem Kastengerippe des Chassis (9) und dem Fender des Vorderrades in Länge (8) arbeitet, so daß eines erste Gelenk (10) das Kastengerippe des Chassis (9) mit dem Vorderfender (8) verbindet, und eines zweite Gelenk (11) der Stoßdämpfer (12) mit dem Fender (8) verbindet.

2. System zur Lenkung, Aufhängung und Befestigung für Räder aus Motorrädern gemäß Anspruch 1, zusätlich umfassend:
- ein Drück Hinterdämpfungystem, welcher zwischen dem Kastengerippe des Chassis (9) und dem Befestigungssystem des Hinterrades durch Kompression arbeitet,
- welcher ein ersten Bindungsmechanismus, der einen Abwäger (16) hat, umfaßt, welcher eine mit dem Kastengerippe des Chassis (9) verbindet Stütze für eine zentrale Rollenlager (17) hat, welche die durch das Drehgelenke (15) des Stoßdämpfer des Hinterrades (14) ausgewirkte Beanspruchung ausgleicht, und eine Kurbel (18) die in der Ende (22, 23) zwei Drehgelenke hat, umfaßt, und die Verbindung zwischen dem Abwäger (16) und dem Hinterfender (19) herstellt, und eine zweite Verbindung durch eine Drehgelenke (13), das den Kastengerippe des Chassis (9) mit dem Hinterfender (19) verbindet, umfaßt.

3. System gemäß Anspruch 2, wohin die Höhe des Motorrades bis zum Grund schnell **dadurch** verändert werden kann, daß man die Kurbel (18) Stellung durch die beide Drehgelenke an der Ende (22, 23) anpaßt.

4. System gemäß Anspruch 1 oder Anspruch 2, wohin der Schwerpunkt niedrig ist, jedoch die Dämpfung Fähigkeit aufrechterhaltet, auf Grund einer niedrigen Stellung der Verbindungen (10, 11, 13, 22).

5. Motorrad oder Kraftrad, das eine Lenkung-, Aufhängung-und Befestigungsystem nach irgendeinem der vorigen Ansprüche umfaßt.

## Revendications

1. Système de direction, de suspension et de fixation pour des roues de motocycles, comprenant:
- un système intégré de direction à la partie antérieure du motocycle, lequel possède un mécanisme qui comporte un guidon raccordé à l'axe de direction (1), lequel tourne dans l'ossature de caisse de chassis (9),
**caractérisé en ce que**:
- l'axe de direction (1) agit sur un bras (2) qui, de son côté, est accouplé au moyen d'un coude (3) qui a des jointes articulées aux extrémités, au moyen d'un deuxième bras (4), pour controler les fourchettes avant (5) du motocycle, lesquelles sont liées en rotation à la ceinture (8) pour diriger la roue avant (6);
- un système d'amortissement de la suspension avant comprenant un amortisseur (12) qui travaille en longueur entre l'ossature de caisse de chassis (9) et la ceinture de la roue avant (8), à travers lequel un premier moyen d'articulation (10) raccorde l'ossature de caisse de chassis (9) à la ceinture avant (8), et un deuxième moyen d'articulation (11) raccorde l'amortisseur (12) à la ceinture (8).

2. Système de direction, de suspension et de fixation pour des roues de motocycles, selon la revendication 1, comprenant additionnellement:
- un système d'amortissement par compression de derrière, qui travaille par compression entre l'ossature de caisse de chassis (9) et le système de fixation de la roue de derrière,
- comprenant un premier mécanisme de raccord qui comprend un balancier (16) qui possède un support de roulement central (17) lié à l'ossature de caisse de chassis (9) et qui contrebalance les efforts imposés par le joint rotatif (15) de l'amortisseur de la roue de derrière (14), et un coude (18) qui possède deux joints rotatifs dans les extrémités (22, 23) et qui met en jeu un raccord entre le balancier (16) et la ceinture de derrière (19), et comprenant un deuxième raccord au moyen d'un joint rotatif (13) qui met en raccord l'ossature de caisse de chassis (9) et la ceinture de derrière (19).

3. Système selon la revendication 2, dans lequel la hauteur du motocycle au sol peut changer rapidement en ajustant la position du coude (18) au moyen des deux joints rotatifs dans les extrémités (22, 23).

4. Système selon la revendication 1 ou la revendication 2, dans lequel le centre de gravité est bas, tout en maintenant la capacité d'amortissement à cause de l'emplacement plus bas des raccords (10, 11, 13, 22).

5. Motocycle ou cyclomoteur qui comprend un système de direction, de suspension et de fixation selon l'une quelconque des revendications antérieures.
